# EUROPÄISCHE PATENTSCHRIFT

(11) **EP 3 036 137 B1**
(45) Veröffentlichungstag und Bekanntmachung des Hinweises auf die Patenterteilung: **01.11.2017**
(21) Anmeldenummer: 14771230.1
(22) Anmeldetag: 10.09.2014
(51) Int. Cl.: B60T 13/66, B60T 17/22

(54) **BREMSAKTOR FÜR EIN BREMSSYSTEM EINES FAHRZEUGS SOWIE VERFAHREN ZUM ABBREMSEN EINES FAHRZEUGS**
BRAKE ACTUATOR FOR A BRAKING SYSTEM OF A VEHICLE, AND METHOD FOR BRAKING A VEHICLE
ACTIONNEUR DE FREIN POUR SYSTÈME DE FREINAGE D'UN VÉHICULE ET PROCÉDÉ DE FREINAGE D'UN VÉHICULE

(30) Priorität: 26.09.2013 DE 102013219438
(43) Veröffentlichungstag der Anmeldung: 29.06.2016
(73) Patentinhaber: Siemens Aktiengesellschaft, 80333 München (DE)
(72) Erfinder: JENNEK, Steffen, 82061 Neuried (DE); SCHIFFERS, Toni, 41812 Erkelenz (DE)
(86) Internationale Anmeldenummer: PCT/EP2014/069299
(87) Internationale Veröffentlichungsnummer: WO 2015/043954

(56) Entgegenhaltungen:
- DE-A1-102004 041 672
- DE-A1-102011 006 002
- DE-A1-102012 014 885
- US-A1- 2009 057 072

## Beschreibung

Ein mit Gleitschutz versehenes Bremssystem eines Fahrzeugs benötigt - wie beispielsweise in den Vorschriften UIC541-05 und EN15595 vorgeschrieben - zusätzlich zur Regelung des Gleitschutzes auch eine unabhängige Überwachung des Gleitschutzes, um eine unzulässige Reduktion der Bremskraft zu verhindern.

Bei aus der Praxis bekannten pneumatischen Bremssystemen dient beispielsweise eine Gleitschutzventileinrichtung mit einem Entlüftenventil und einem Haltenventil dem Gleitschutz. Dabei werden beispielsweise Ansteuerzeiten für das Entlüftenventil und das Haltenventil überwacht. Überschreitet eine der Ansteuerzeiten einen vorgegebenen Schwellwert, so schaltet eine unabhängige Gleitschutzüberwachung in Form einer Hardware-Schaltung die Gleitschutzventileinrichtung ab und deaktiviert damit den Gleitschutz, so dass wieder die volle Bremskraft aufgebaut wird.

Bei der Verwendung v intelligenten Bremsaktuatoren, die einen gleitschutzkorrigierten Bremssollwert oder ein Reduziersignal zur Bildung des gleitschutzkorrigierten Bremssollwertes über einen Bus oder über Analogwerte erhalten, ist die genannte Hardware-Lösung jedoch nicht anwendbar.

Die Erfindung betrifft einen Bremsaktor für ein Bremssystem eines Fahrzeugs, insbesondere eines Schienenfahrzeugs, der geeignet ausgebildet ist, von einer Bremssteuerung einen gleitschutzkorrigierten Bremssollwert zu erfassen oder eine Gleitschutzkorrektureinrichtung aufweist, die geeignet ausgebildet ist, einen von der Bremssteuerung erfassten Bremssollwert mittels eines Reduziersignals einer Gleitschutzregelungseinrichtung auf den gleitschutzkorrigierten Bremssollwert zu korrigieren.

Die Erfindung betrifft auch ein Bremssystem zum Bremsen eines Fahrzeugs, insbesondere eines Schienenfahrzeugs, bei dem einander zugeordnete erste und zweite Bremsmittel und ein derartiger Bremsaktor, der eine die ersten Bremsmittel zum Reibschluss mit den zweiten Bremsmitteln betätigende Sollwert-Kraft-Umsetzungseinrichtung umfasst, eine Bremsvorrichtung bilden, die geeignet ausgebildet ist, ein an einem Eingang der Sollwert-Kraft-Umsetzungseinrichtung anliegendes Ausgangssignal in einen Bremsistwert umzusetzen.

Ferner betrifft die Erfindung ein Fahrzeug, insbesondere ein Schienenfahrzeug mit einem derartigen Bremssystem.

Außerdem betrifft die Erfindung ein Verfahren zum Abbremsen eines Fahrzeugs, insbesondere eines Schienenfahrzeugs, bei dem ein Bremsaktor von einer Bremssteuerung einen gleitschutzkorrigierten Bremssollwert erfasst oder eine Gleitschutzkorrektureinrichtung des Bremsaktors einen von der Bremssteuerung erfassten Bremssollwert mittels eines Reduziersignals einer Gleitschutzüberwachungseinrichtung auf den gleitschutzkorrigierten Bremssollwert korrigiert.

Ein gattungsgemäßer Bremsaktor und ein gattungsgemäßes Verfahren zum Abbremsen eines Fahrzeugs sind beispielsweise aus der Druckschrift WO 2012/126946 A2 bekannt.

Der Erfindung liegt die Aufgabe zu Grunde, die Regelbarkeit eines derartigen Bremsaktors zu verbessern.

Gelöst wird diese Aufgabe durch einen Bremsaktor mit den Merkmalen des Patentanspruches 1, bei dem eine Gleitschutzüberwachungseinrichtung vorgesehen ist, an der der gleitschutzkorrigierte Bremssollwert und der Bremssollwert anliegen und die geeignet ausgebildet ist, unter zumindest einer vorbestimmten ersten Umschaltbedingung von einer ersten Stellung in eine zweite Stellung umzuschalten und unter zumindest einer vorbestimmten zweiten Umschaltbedingung von der zweiten Stellung in die erste Stellung zurückzuschalten, wobei in der ersten Stellung der gleitschutzkorrigierte Bremssollwert und in der zweiten Stellung der Bremssollwert als Führungssollwert an einem Ausgang der Gleitschutzüberwachungseinrichtung bereitgestellt ist.

Gelöst wird diese Aufgabe auch durch ein Verfahren gemäß Anspruch 14, bei dem eine Gleitschutzüberwachungseinrichtung des Bremsaktors den gleitschutzkorrigierten Bremssollwert und den Bremssollwert erfasst und bei dem die Gleitschutzüberwachungseinrichtung unter zumindest einer vorbestimmten ersten Umschaltbedingung von einer ersten Stellung in eine zweite Stellung umschaltet und unter zumindest einer vorbestimmten zweiten Umschaltbedingung von der zweiten Stellung in die erste Stellung zurückschaltet, wobei die Gleitschutzüberwachungseinrichtung in der ersten Stellung den gleitschutzkorrigierte Bremssollwert und in der zweiten Schaltstellung den Bremssollwert als Führungssollwert an einem Ausgang bereitstellt.

Mit dem erfindungsgemäßen Bremsaktor und dem erfindungsgemäßen Verfahren zum Abbremsen eines Fahrzeugs, können in vorteilhafter Weise Bremsvorgänge auch unter den vorbestimmten ersten Umschaltbedingungen sicher geregelt werden, ohne gleich auf eine passive Rückfallebene zurückzugreifen zu müssen.

Vorzugsweise sollte die Gleitschutzüberwachungseinrichtung von der ersten in die zweite Stellung umschalten, wenn zumindest eine der folgenden vorbestimmten ersten Umschaltbedingungen erfüllt ist:
[a] wenn der gleitschutzkorrigierte Bremssollwert über eine vorgegebene erste Dauer unverändert und dabei kleiner ist als der Bremssollwert,
[b] wenn der gleitschutzkorrigierte Bremssollwert über eine vorgegebene zweite Dauer unverändert ist oder abfällt und dabei kleiner ist als der Bremssollwert,
[c] wenn der gleitschutzkorrigierte Bremssollwert über eine vorgegebene dritte Dauer größer ist als der Bremssollwert,
[d] wenn der gleitschutzkorrigierte Bremssollwert ein ungültiges Datum ist, wenn also der gleitschutzkorrigierte Bremssollwert ein Datenwert ist, der bei Datenprüfung als ungültig erkannt worden ist.

Von der zweiten in die erste Stellung sollte vorzugsweise zurückgeschaltet werden, wenn folgende vorbestimmte zweite Umschaltbedingung erfüllt ist:
[e] wenn über eine vorgegebene vierte Dauer keine der vorbestimmten ersten Umschaltbedingungen erfüllt ist.

Ferner wird eine weitere Gleitschutzüberwachungseinrichtung als vorteilhaft angesehen, an der der gleitschutzkorrigierte Bremssollwert und der Bremssollwert anliegen und die geeignet ausgebildet ist, unter zumindest einer weiteren vorbestimmten ersten Umschaltbedingung von einer ersten Stellung in eine zweite Stellung umzuschalten und unter zumindest einer weiteren vorbestimmten zweiten Umschaltbedingung von der zweiten Stellung in die erste Stellung zurückzuschalten, wobei in der ersten Stellung der gleitschutzkorrigierte Bremssollwert und in der zweiten Stellung der Bremssollwert als Überwachungssollwert an einem Ausgang der weitere Gleitschutzüberwachungseinrichtung bereitgestellt ist.

Vorzugsweise sollte die weitere Gleitschutzüberwachungseinrichtung von der ersten in die zweite Stellung umschalten, wenn zumindest eine der folgenden weiteren vorbestimmten ersten Umschaltbedingungen erfüllt ist:
[f] wenn der gleitschutzkorrigierte Bremssollwert über eine weitere vorgegebene erste Dauer unverändert und dabei kleiner ist als der Bremssollwert,
[g] wenn der gleitschutzkorrigierte Bremssollwert über eine weitere vorgegebene zweite Dauer unverändert ist oder abfällt und dabei kleiner ist als der Bremssollwert,
[h] wenn der gleitschutzkorrigierte Bremssollwert über eine weitere vorgegebene dritte Dauer größer ist als der Bremssollwert,
[i] wenn der gleitschutzkorrigierte Bremssollwert ein ungültiges Datum ist.

Von der zweiten in die erste Stellung sollte vorzugsweise zurückgeschaltet werden, wenn folgende weitere vorbestimmte zweite Umschaltbedingung erfüllt ist:
[k] wenn über eine weitere vorgegebene vierte Dauer keine der weiteren vorbestimmten ersten Umschaltbedingungen erfüllt ist.

Dabei wird es als vorteilhaft angesehen, wenn
- die vorgegebene erste Dauer kürzer ist als die weitere vorgegebene erste Dauer,
- die vorgegebene zweite Dauer kürzer ist als die weitere vorgegebene zweite Dauer,
- die vorgegebene dritte Dauer länger ist als die weitere vorgegebene dritte Dauer und
- die vorgegebene vierte Dauer länger ist als die weitere vorgegebene vierte Dauer.

Vorzugsweise weist der erfindungsgemäße Bremsaktor eine Sollwertregelungseinrichtung auf, die geeignet ausgebildet ist, den am Ausgang der Gleitschutzüberwachungseinrichtung bereitgestellten Führungssollwert und einen mittels einer Sensoreinrichtung erfassten Bremsistwert zu erfassen und an ihrem Ausgang zumindest ein erstes Ausgangssignal so auszugeben, dass der erfasste Bremsistwert dem bereitgestellten Führungssollwert entspricht.

Weiterhin weist der erfindungsgemäße Bremsaktor vorzugsweise eine Rückfalleinrichtung auf, die geeignet ausgebildet ist, an ihrem Ausgang zumindest ein vorgegebenes zweites Ausgangssignal bereitzustellen.

Ferner weist der erfindungsgemäße Bremsaktor vorzugsweise folgende weitere Einrichtungen auf:
- eine Sollwert-Kraft-Umsetzungseinrichtung, die geeignet ausgebildet ist, unter der Einwirkung eines eingangsseitig anliegenden der Ausgangssignale erste Bremsmittel zum Reibschluss mit zweiten Bremsmitteln zu betätigen,
- eine Istwertüberwachungseinrichtung, die geeignet ausgebildet ist, den am Ausgang der weiteren Gleitschutzüberwachungseinrichtung bereitgestellten Überwachungssollwert und den mittels der Sensoreinrichtung erfassten Bremsistwert zu erfassen und bei unzulässigen Abweichungen des Bremsistwertes von dem bereitgestellten Überwachungssollwert ein Umschaltsignals auszugeben und
- eine Umschalteinrichtung, die geeignet ausgebildet ist, das Umschaltsignal der Istwertüberwachungseinrichtung zu erfassen und beim Eingang des Umschaltsignals von einer ersten Schaltstellung in eine zweite Schaltstellung umzuschalten, wobei die Sollwert-Kraft-Umsetzungseinrichtung in der ersten Schaltstellung der Umschalteinrichtung eingangsseitig mit dem Ausgang der Sollwertregelungseinrichtung und in der zweiten Schaltstellung der Umschalteinrichtung eingangsseitig mit dem Ausgang der Rückfalleinrichtung verbunden ist.

Zur weiteren Erläuterung der Erfindung sind in der
- Figur 1: ein erfindungsgemäßes Schienenfahrzeug mit einem erfindungsgemäßen Bremssystem, bei dem Radsätzen von Drehgestellen jeweils zumindest ein erfindungsgemäßer Bremsaktor zugeordnet ist, und in der
- Figur 2: einer der erfindungsgemäßen Bremsaktoren gezeigt.

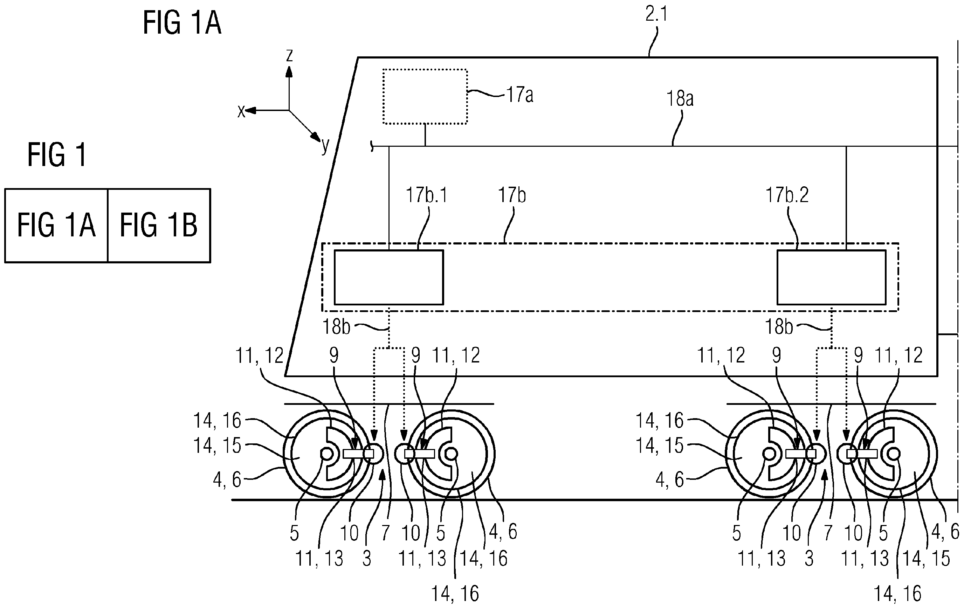

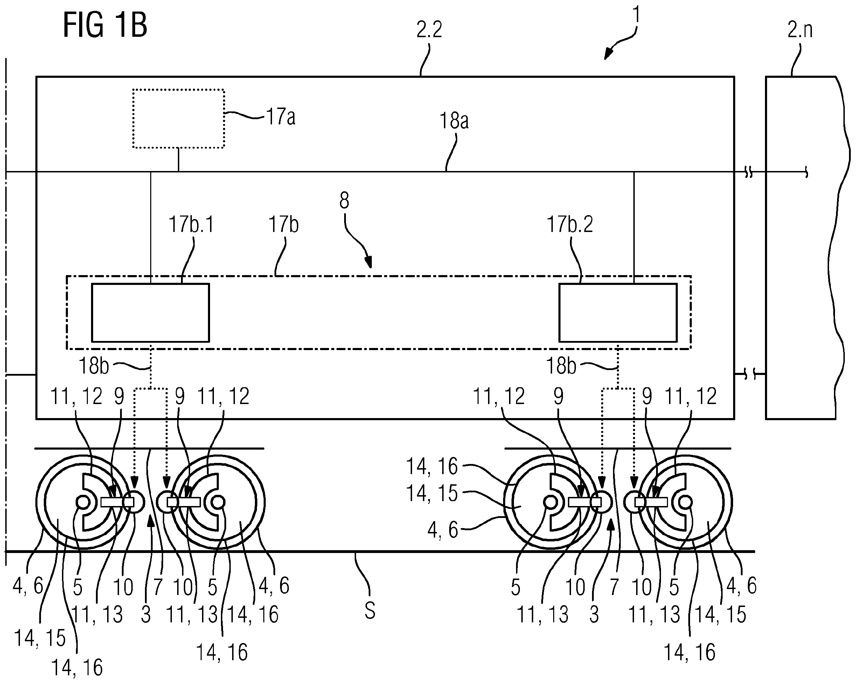

Gemäß Figur 1 verfügt das Schienenfahrzeug 1 über Wagen 2.1, 2.2, ..., 2.n, deren Wagenkästen in hier nicht gezeigter Weise jeweils über eine Sekundärfederung von zwei Fahrwerken in Form von Drehgestellen 3 getragen sind. Die Drehgestelle 3 weisen jeweils zwei Radsätze 4 auf. Die Radsätze 4 weisen jeweils eine Welle 5 auf, an deren Enden Räder 6 gehalten sind. Dabei sind die Wellen 5 der Radsätze 4 in hier nicht gezeigter Weise in Radsatzlagern drehbar gelagert, die über ein Gehäuse und eine Primärfederung an einem Drehgestellrahmen 7 des jeweiligen Drehgestells 3 angebunden sind. Weiterhin verfügt das Schienenfahrzeug 1 über ein hier als Ganzes mit 8 bezeichnetes Bremssystem.

Jeder Welle 5 des Schienenfahrzeuges 1 ist üblicherweise jeweils mindestens eine erfindungsgemäße Bremseinheit 9 zugeordnet. Somit verfügt jeder der Wagen 2.1, 2.2, ..., 2.n über mindestens vier dieser Bremseinheiten 9.

Jede der Bremseinheiten 9 weist einen Bremsaktor 10 und vom Bremsaktor 10 betätigte erste Bremsmittel 11 in Form einer mit zumindest einem Bremsbelag 12 versehenen Kraftübertragungsmechanik 13 auf. Dabei wirken die ersten Bremsmittel 11 jeder dieser Bremseinheiten 9 jeweils mit ihnen zugeordneten zweiten Bremsmitteln 14 in Form eines mit der Welle 5 rotierenden und mit zumindest einer Bremsfläche 15 versehenen Bremselementes zusammen.

Als Bremselement kann beispielsweise eine Radbremsscheibe, eine Wellenbremsscheibe, das Rad selbst oder auch eine Bremstrommel dienen.

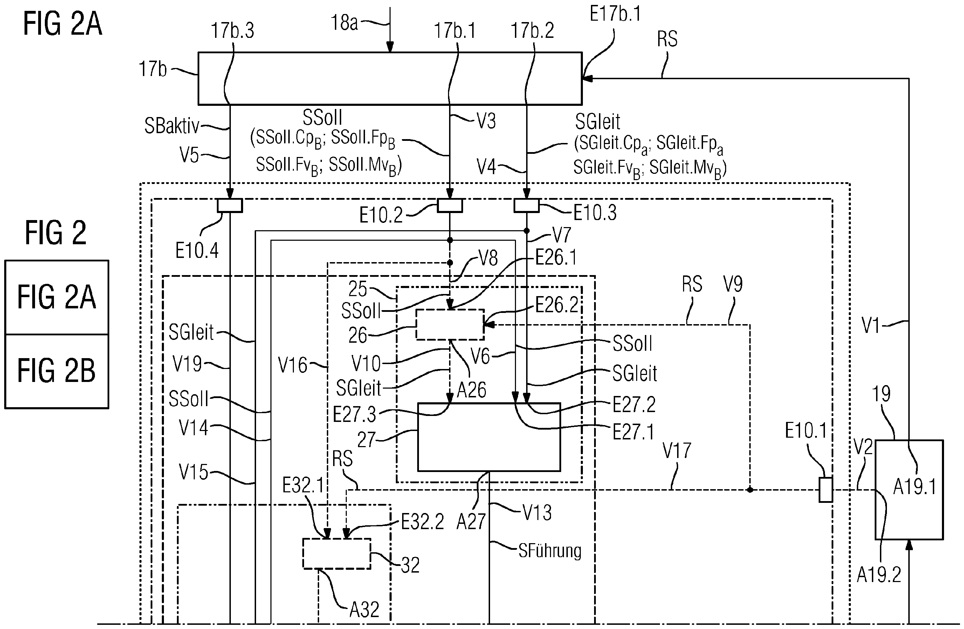

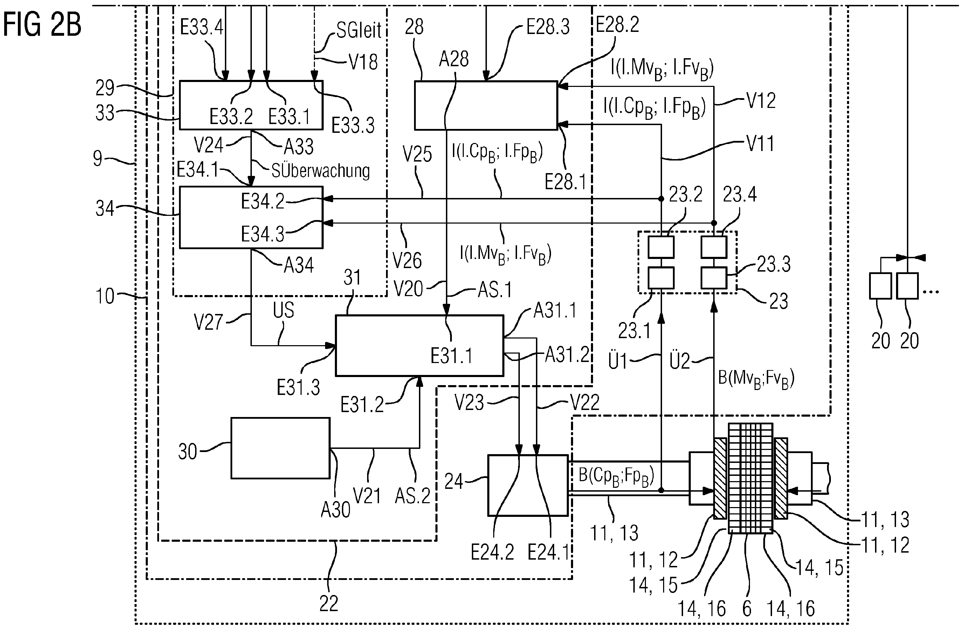

Bei dem gezeigten Ausführungsbeispiel bildet jeweils eine Radbremsscheibe, die gemäß Figur 2 aus zwei Teilbremsscheiben 16 besteht, die zweiten Bremsmittel 14, die den ersten Bremsmitteln 11 zugeordnet sind. Außerdem ist bei dem gezeigten Ausführungsbeispiel die Kraftübertragungsmechanik 13 der ersten Bremsmittel 11 als eine mit zwei Bremsbelägen 12 versehene Zuspanneinrichtung in Form einer Bremszange ausgebildet, die mittels einer hier nicht gezeigten Bremsbrücke an dem Drehgestell 3 gehalten ist, das auch die abzubremsende Welle 5 trägt. Die Zuspanneinrichtung könnte aber alternativ auch als Bremssattel ausgebildet sein.

Die mit den Bremsbelägen 12 versehene Kraftübertragungsmechanik 13 ist unter der Einwirkung des Bremsaktors 10 zur Herstellung eines Reibschlusses zwischen den ersten Bremsmitteln 11 und den zweiten Bremsmitteln 14 über der aus den beiden Teilbremsscheiben 16 gebildeten Radbremsscheibe zuspannbar.

Der Bremsaktor 10 ist bei dem in der Figur 1 gezeigten Ausführungsbeispiel ein elektro-hydraulischer Bremsaktor.

Das Bremssystem 8 weist ein zentrales Steuergerät 17a sowie in jedem der Wagen 2.1, 2.2, ..., 2.n eine Bremssteuerung 17b auf. Das zentrales Steuergerät 17a kann von einer zentralen Fahrzeugsteuerung gebildet sein. Die Bremssteuerung 17b kann von einem oder - wie hier gezeigt - von zwei Bremssteuergeräten 17b.1 und 17b.2 gebildet sein. Dabei sind die Bremssteuergeräte 17b.1 und 17b.2 über einen Zugbus 18a von dem zentralen Steuergerät 17a des Bremssystems 8 ansteuerbar.

Über die Bremssteuerung 17b erhalten die Bremsaktoren 10 der Bremseinheiten 9 oder Gruppen der Bremsaktoren 10 jeweils einen Bremsbefehl. Dabei können die Bremsbefehle über hier als Ganzes mit 18b bezeichnete Verbindungseinrichtungen in Form von einer oder mehreren Steuerleitungen und/oder eines Datenbusses und/oder Funkverbindungen an die Bremsaktoren 10 übertragen werden.

Die Figur 2 zeigt schematisch eine der an die Bremssteuerung 17b eines der Wagen angeschlossenen Bremseinheiten 9 mit einem erfindungsgemäßen Bremsaktor 10, dem eine Gleitschutzregelungseinrichtung 19 zugeordnet ist. Die Gleitschutzregelungseinrichtung 19 erfasst über Raddrehzahlsensoren 20 die Drehzahl der Räder 6 der jeweiligen Welle 5 und erzeugt ein Reduziersignal RS zur Begrenzung des maximalen Radschlupfes der Räder 6. Das von der Gleitschutzregelungseinrichtung 19 gebildete Reduziersignal RS kann über eine Verbindungen V1, die einen Ausgang A19.1 mit einem Eingang E17b.1 verbindet, zur Bremssteuerung 17b und optional über eine Verbindungen V2, die einen Ausgang A19.2 mit der Schnittstelle E10.1 verbindet, zum Bremsaktor 10 übertragen werden. Dabei können die Verbindungen V1 und V2 in Form einer oder mehrerer Steuerleitungen und/oder eines Datenbusses und/oder Funkverbindungen ausgebildet sein.

Der Bremsaktor 10 umfasst eine lokale Elektronik 22, eine Sensoreinrichtung 23 und eine elektro-hydraulische Sollwert-Kraft-Umsetzungseinrichtung 24, wobei der Bremsaktor 10 mit seinen Bestandteilen 22, 23 und 24 und die ersten Bremsmittel 11 mittels des hier nicht gezeigten Verbindungsteils zu der Bremseinheit 9 verbunden sind. Der Bremsaktor 10 und die ersten Bremsmittel 11 sind also Teil der Bremseinheit 9, die in ihrer Gesamtheit zur Montage an dem in der Figur 1 schematische gezeigten Drehgestell 3 eingerichtet ist, an dem auch die Welle 5 gehalten ist. Mit der Welle 5 rotieren die den ersten Bremsmitteln 11 zugeordneten zweiten Bremsmittel 14.

Das Zusammenwirken der lokalen Elektronik 22, der Sensoreinrichtung 23 und der elektro-hydraulische Sollwert-Kraft-Umsetzungseinrichtung 24 ist im Folgenden anhand der in Figur 2 näher beschrieben.

Die lokale Elektronik 22 bildet eine Sollwerterfassungseinheit 25, die mit einer Sollwertkorrektureinrichtung in Form einer Gleitschutzkorrektureinrichtung 26 versehen sein kann und die eine Gleitschutzüberwachungseinrichtung 27 aufweist.

Außerdem bildet die lokale Elektronik 22 eine Sollwertregelungseinrichtung 28, eine Überwachungseinheit 29, eine Rückfalleinrichtung 30 und eine Umschalteinrichtung 31. Die Rückfalleinrichtung 30 bildet eine passive Rückfallebene.

Die Überwachungseinheit 29 kann mit einer weiteren Gleitschutzkorrektureinrichtung 32 versehen sein und weist eine weitere Gleitschutzüberwachungseinrichtung 33 und eine Istwertüberwachungseinrichtung 34 auf.

Die Figur 2 zeigt neben der Schnittstelle E10.1 weitere Schnittstellen E10.2, E10.3 und E10.4 des Bremsaktors 10, die über Verbindungen V3, V4 und V5 der in Figur 1 mit 18b bezeichneten Verbindungseinrichtung mit der Bremssteuerung 17b verbunden sind. Es muss aber ergänzend erwähnt werden, dass zur besseren Übersicht nicht alle Schnittstellen des Bremsaktors 10 dargestellt sind. Nicht gezeigt ist insbesondere eine Schnittstelle zu einer Spannungsversorgung des Bremsaktors 10.

In Abhängigkeit des Bremsbefehls sendet die Bremssteuerung 17b über die Verbindung V3, die einen Ausgang A17b.1 mit der Schnittstelle E10.2 verbindet, und eine Verbindung V6, die die Schnittstelle E10.2 mit einem Eingang E27.1 verbindet, einen Bremssollwert SSoll einer zu regelnden Bremsgröße B an die im Bremsaktor 10 befindliche Gleitschutzüberwachungseinrichtung 27. Weiterhin sendet die Bremssteuerung 17b über die Verbindung V4, die einen Ausgang A17b.2 mit der Schnittstelle E10.3 verbindet, und eine Verbindung V7, die die Schnittstelle E10.3 mit einem Eingang E27.2 verbindet, einen mittels des Reduziersignals RS gleitschutzkorrigierten Bremssollwert SGleit der zu regelnden Bremsgröße B an die Gleitschutzüberwachungseinrichtung 27. Die Gleitschutzüberwachungseinrichtung 27 bildet eine erste Ebene einer Gleitschutzüberwachung.

Der Bremssollwert SSoll den der Bremsaktor 10 von der Bremssteuerung 17b erhält, entspricht im Betriebsbremsfall einem Betriebsbremssollwert und im Schnellbremsfall einem Schnellbremssollwert.

Alternativ hierzu kann der Bremssollwert SSoll an die Gleitschutzüberwachungseinrichtung 27 und über die Verbindung V3, und eine Verbindung V8, die die Schnittstelle E10.2 mit einem Eingang E26.1 verbindet, an die Gleitschutzkorrektureinrichtung 26 gesendet werden. In diesem alternativen Fall empfängt die Gleitschutzkorrektureinrichtung 26 über eine Verbindung V9, die die Schnittstelle E10.1 mit einem Eingang E26.2 verbindet, das Reduziersignal RS. Mit Hilfe des Reduziersignal RS nimmt die Gleitschutzkorrektureinrichtung 26 eine Korrektur des Bremssollwertes SSoll vor. Den derart korrigierten Bremssollwert stellt die Gleitschutzkorrektureinrichtung 26 über eine Verbindung V10, die einen Ausgang A26 mit einem Eingang E27.3 verbindet, als gleitschutzkorrigierten Bremssollwert SGleit der Gleitschutzüberwachungseinrichtung 27 zur Verfügung.

Der Bremssollwert SSoll der Bremsgröße B kann ein Sollwert SSoll. Cp_{B}; SSoll.Fp_{B} einer Anpressgröße Cp_{B}; Fp_{B} als Bremsgröße oder ein Sollwert SSoll. Fv_{B}; SSoll.Mv_{B} einer Verzögerungsgröße Fv_{B}; Mv_{B} als Bremsgröße sein. Dabei kann als Anpressgröße ein Hydraulikdruck Cp_{B} oder eine Anpresskraft Fp_{B} und als Verzögerungsgröße eine Verzögerungskraft Fv_{B} oder ein Verzögerungsmoment Mv_{B} dienen. Entsprechend kann der gleitschutzkorrigierte Bremssollwert SGleit der Bremsgröße B ein gleitschutzkorrigierter Sollwert SGleit.Cp_{B}; SGleit.Fp_{B} der Anpressgröße Cp_{B}; Fp_{B} oder ein gleitschutzkorrigierter Sollwert SGleit.Fv_{B}; SGleit.Mv_{B} der Verzögerungsgröße Fv_{B}; Mv_{B} sein.

Ein Bremsistwert I - also einen Istwert der Bremsgröße B - wird von der Sollwertregelungseinrichtung 28 erfasst. Der Bremsistwert I kann ein am Eingang E28.1 der Sollwertregelungseinrichtung 28 erfasster Istwert I.Cp_{B}; I.Fp_{B} der Anpressgröße Cp_{B}; Fp_{B} oder ein am Eingang E28.2 der Sollwertregelungseinrichtung 28 erfasster Istwert I.Fv_{B}; I.Mv_{B} der Verzögerungsgröße Fv_{B}; Mv_{B} sein. Entsprechend kann die Sensoreinrichtung 23, die Bestandteil der Bremseinheit 9 ist, über einen Übertragungspfad Ü1 mittels eines ersten Sensors 23.1 den Istwert I.Cp_{B} des Hydraulikdruckes als Bremsgröße oder mittels eines zweiten Sensors 23.2 den Istwert I.Fp_{B} der Anpresskraft als Bremsgröße ermitteln und über eine Verbindung V11 an dem Eingang E28.1 der Sollwertregelungseinrichtung 28 bereitstellen. Alternativ oder Zusätzlich kann die Sensoreinrichtung 23 über einen Übertragungspfad Ü2 mittels eines dritten Sensors 23.3 den Istwert I.Fv_{B} der Verzögerungskraft als Bremsgröße oder mittels eines vierten Sensors 23.4 den Istwert I.Mv_{B} des Verzögerungsmomentes als Bremsgröße ermitteln und über eine Verbindung V12 an dem Eingang E28.2 der Sollwertregelungseinrichtung 28 bereitstellen.

Die Gleitschutzüberwachungseinrichtung 27, an der der gleitschutzkorrigierte Bremssollwert SGleit und der Bremssollwert SSoll anliegen, ist geeignet ausgebildet, unter zumindest einer vorbestimmten ersten Umschaltbedingung von einer ersten Stellung in eine zweite Stellung umzuschalten und unter zumindest einer vorbestimmten zweiten Umschaltbedingung von der zweiten Stellung in die erste Stellung zurückzuschalten. In der ersten Stellung ist der gleitschutzkorrigierte Bremssollwert SGleit als Führungssollwert SFührung an einem Ausgang A27 der Gleitschutzüberwachungseinrichtung 27 bereitgestellt. In der zweiten Stellung ist der Bremssollwert SSoll als der Führungssollwert SFührung an dem Ausgang A27 der Gleitschutzüberwachungseinrichtung 27 bereitgestellt. Die Gleitschutzüberwachungseinrichtung 27 übergibt den Führungssollwert SFührung über eine Verbindung V13, die den Ausgang A27 der Gleitschutzüberwachungseinrichtung 27 mit dem Eingang E28.3 der Sollwertregelungseinrichtung 28 verbindet, an die Sollwertregelungseinrichtung 28.

Die Gleitschutzüberwachungseinrichtung 27 ist dabei geeignet ausgebildet, von der ersten in die zweite Stellung umzuschalten, wenn zumindest eine der folgenden vorbestimmten ersten Umschaltbedingungen [a], [b], [c], [d] erfüllt ist:
[a] wenn der gleitschutzkorrigierte Bremssollwert SGleit über mehr als eine vorgegebene erste Dauer T1.1 von vorzugsweise 4 Sekunden unverändert und dabei kleiner ist als der Bremssollwert SSoll,
[b] wenn der gleitschutzkorrigierte Bremssollwert SGleit über eine vorgegebene zweite Dauer T2.1 von vorzugsweise 8 Sekunden unverändert ist oder abfällt und dabei kleiner ist als der Bremssollwert SSoll,
[c] wenn der gleitschutzkorrigierte Bremssollwert SGleit) über eine vorgegebene dritte Dauer T3.1 von vorzugsweise 4 Sekunden größer ist als der Bremssollwert SSoll,
[d] wenn der gleitschutzkorrigierte Bremssollwert SGleit ein ungültiges Datum ist.

Weiterhin ist die Gleitschutzüberwachungseinrichtung 27 geeignet ausgebildet, von der zweiten in die erste Stellung zurückzuschalten, wenn folgende vorbestimmte zweite Umschaltbedingung ([e]) erfüllt ist:
[e] wenn über eine vorgegebene vierte Dauer T4.1 von vorzugsweise 20 Sekunden keine der vorbestimmten ersten Umschaltbedingungen ([a], [b], [c], [d]) erfüllt ist.

Der Führungssollwert SFührung, der die Eingangsgröße für die Sollwertregelungseinrichtung 28 bildet, wird also mit anderen Worten wie folgt bestimmt:
Grundsätzlich wird der gleitschutzkorrigierte Bremssollwert SGleit als Eingangsgröße für die Sollwertregelungseinrichtung 28 verwendet: SFührung = SGleit.

SFührung wird jedoch auf SSoll umgeschaltet, wenn:
- SGleit < SSoll ist und SGleit für mehr als 4 Sekunden unverändert ist
   ODER
- SGleit < SSoll ist und innerhalb von 8 Sekunden kein positiver Anstieg von SGleit erkennbar ist
   ODER
- für mehr als 4 Sekunden SGleit > SSoll ist
   ODER
- SGleit ein ungültiges Datum ist.

Eine Rückschaltung von SFührung auf SGleit erfolgt, wenn keine der oben genannten vorbestimmten ersten Umschaltbedingungen für mehr als 20 Sekunden erfüllt ist.

Parallel zur Gleitschutzüberwachungseinrichtung 27 erhält auch die weitere Gleitschutzüberwachungseinrichtung 33 über eine Verbindung V14, die die Schnittstelle E10.2 mit einem Eingang E33.1 der weitere Gleitschutzüberwachungseinrichtung 33 verbindet, den Bremssollwert SSoll von der Bremssteuerung 17b. Ferner erhält die weitere Gleitschutzüberwachungseinrichtung 33 über eine Verbindung V15, die die Schnittstelle E10.3 mit einem Eingang E33.2 der weitere Gleitschutzüberwachungseinrichtung 33 verbindet, den gleitschutzkorrigierte Bremssollwert SGleit von der Bremssteuerung 17b. Die weitere Gleitschutzüberwachungseinrichtung 33 bildet eine zweite Ebene der Gleitschutzüberwachung.

Alternativ hierzu kann der Bremssollwert SSoll an die weitere Gleitschutzüberwachungseinrichtung 33 und über die Verbindung V3 und eine Verbindung V16, die die Schnittstelle E10.2 mit einem Eingang E32.1 verbindet, an die weitere Gleitschutzkorrektureinrichtung 32 gesendet werden. In diesem alternativen Fall empfängt die weitere Gleitschutzkorrektureinrichtung 32 über eine Verbindung V17, die die Schnittstelle E10.1 mit einem Eingang E32.2 verbindet, das Reduziersignal RS. Mit Hilfe des Reduziersignal RS nimmt die weitere Gleitschutzkorrektureinrichtung 32 eine Korrektur des Bremssollwertes SSoll vor. Den derart korrigierten Bremssollwert stellt die weitere Gleitschutzkorrektureinrichtung 32 über eine Verbindung V18, die einen Ausgang A32 mit einem Eingang E33.3 verbindet, als gleitschutzkorrigierten Bremssollwert SGleit der weiteren Gleitschutzüberwachungseinrichtung 33 zur Verfügung.

Über die Verbindung V5, die einen Ausgang A17b.3 der Bremssteuerung mit der Schnittstelle E10.4 verbindet, und eine Verbindung V19, die die Schnittstelle E10.4 mit einem Eingang E33.4 der weiteren Gleitschutzüberwachungseinrichtung 33 verbindet, kann für einen Schnellbremsfall von der Bremssteuerung 17b ein Schnellbremssignal SBaktiv an die weitere Gleitschutzüberwachungseinrichtung 33 übertragen werden.

Die weitere Gleitschutzüberwachungseinrichtung 33 ist insbesondere für den Schnellbremsfall geeignet ausgebildet, unter zumindest einer weiteren vorbestimmten ersten Umschaltbedingung von einer ersten Stellung in eine zweite Stellung umzuschalten und unter zumindest einer weiteren vorbestimmten zweiten Umschaltbedingung von der zweiten Stellung in die erste Stellung zurückzuschalten. In der ersten Stellung ist der gleitschutzkorrigierte Bremssollwert SGleit als Überwachungssollwert SÜberwachung an einem Ausgang A33 der weiteren Gleitschutzüberwachungseinrichtung 33 bereitgestellt. In der zweiten Stellung ist der Bremssollwert SSoll als der Überwachungssollwert SÜberwachung an dem Ausgang A33 der weiteren Gleitschutzüberwachungseinrichtung 33 bereitgestellt.

Die weitere Gleitschutzüberwachungseinrichtung 33 ist dabei geeignet ausgebildet ist, von der ersten in die zweite Stellung umzuschalten, wenn zumindest eine der folgenden weiteren vorbestimmten ersten Umschaltbedingungen ([f], [g], [h], [i]) erfüllt ist:
[f] wenn der gleitschutzkorrigierte Bremssollwert (SGleit) über eine weitere vorgegebene erste Dauer (T1.2) unverändert und dabei kleiner ist als der Bremssollwert (SSoll),
[g] wenn der gleitschutzkorrigierte Bremssollwert (SGleit) über eine weitere vorgegebene zweite Dauer (T2.2) unverändert ist oder abfällt und dabei kleiner ist als der Bremssollwert (SSoll),
[h] wenn der gleitschutzkorrigierte Bremssollwert (SGleit) über eine weitere vorgegebene dritte Dauer (T3.2) größer ist als der Bremssollwert (SSoll),
[i] wenn der gleitschutzkorrigierte Bremssollwert (SGleit) ein ungültiges Datum ist.

Weiterhin ist die weitere Gleitschutzüberwachungseinrichtung 33 geeignet ausgebildet ist, von der zweiten in die erste Stellung zurückzuschalten, wenn folgende weitere vorbestimmte zweite Umschaltbedingung ([k]) erfüllt ist:
[k] wenn über eine weitere vorgegebene vierte Dauer (T4.2) keine der weiteren vorbestimmten ersten Umschaltbedingungen ([f], [g], [h], [i]) erfüllt ist.

Mit anderen Worten wird im Schnellbremsfall - also bei einem aktiviertem Schnellbremssignal SBaktiv - der Überwachungssollwert SÜberwachung wie folgt gebildet:
Grundsätzlich wird der Gleitschutzsollwert SGleit als Eingangsgröße für die Istwertüberwachungseinrichtung 34 verwendet: SÜberwachung = SGleit.

SÜberwachung wird jedoch auf SSoll umgeschaltet, wenn:
- SGleit < SSoll ist und SGleit für mehr als 5 Sekunden unverändert ist
   ODER
- SGleit < SSoll ist und innerhalb von 10 Sekunden kein positiver Anstieg von SGleit erkennbar ist
   ODER
- für mehr als 3 Sekunden SGleit > SSoll ist
   ODER
- SGleit ein ungültiges Datum ist.

Eine Rückschaltung von SÜberwachung auf SGleit erfolgt, wenn für mehr als 19 Sekunden keine der oben genannten weiteren vorbestimmten ersten Umschaltbedingungen erfüllt ist.

Die vorgegebene erste Dauer T1.1 ist also kürzer als die weitere vorgegebene erste Dauer T1.2. Die vorgegebene zweite Dauer T2.1 ist kürzer als die weitere vorgegebene zweite Dauer T2.2. Die vorgegebene dritte Dauer T3.1 ist länger als die weitere vorgegebene dritte Dauer T3.2. Außerdem ist die vorgegebene vierte Dauer T4.1 länger ist als die weitere vorgegebene vierte Dauer T4.2. Dies gewährleitet, dass zunächst die erste Ebene der Gleitschutzüberwachung anspricht und somit die Bremsgröße B auf den Bremssollwert SSoll geregelt aufgebaut werden kann. Beim Ansprechen der zweiten Ebene der Gleitschutzüberwachung erfolgt die Umschaltung auf die passive Rückfallebene. Eine Regelung der Bremsgröße B ist dann nicht mehr möglich.

Die Sollwertregelungseinrichtung 28 erfasst dabei den am Ausgang A27 der Gleitschutzüberwachungseinrichtung 27 bereitgestellten Führungssollwert SFührung und den mittels der Sensoreinrichtung 23 erfassten Bremsistwert I und gibt - zur Regelung der Bremsgröße B - an einem Ausgang A28 ein erstes Ausgangssignal AS.1 so aus, dass der erfasste Bremsistwert I dem von der Gleitschutzüberwachungseinrichtung 27 an die Sollwertregelungseinrichtung 28 übermittelten Führungssollwert SFührung entspricht.

Bei der Regelung der Anpressgröße Cp_{B}; Fp_{B} als Bremsgröße B gibt die Sollwertregelungseinrichtung 28 das erste Ausgangssignal AS.1 also so aus, dass der erfasste Istwert I.Cp_{B}; I.Fp_{B} dem Führungssollwert SFührung entspricht, wobei in der ersten Schaltstellung der ersten Gleitschutzüberwachungseinrichtung SGleit.Cp_{B}; SGleit.Fp_{B} den Führungssollwert SFührung bildet und in der zweiten Schaltstellung der ersten Gleitschutzüberwachungseinrichtung SSoll.Cp_{B}; SSoll.Fp_{B} den Führungssollwert SFührung bildet.

Bei der Regelung der Verzögerungsgröße Fv_{B}; Mv_{B} als Bremsgröße B gibt die Sollwertregelungseinrichtung 28 das erste Ausgangssignal AS.1 also so aus, dass der erfasste Istwert I.Fv_{B}; I.Mv_{B} dem Führungssollwert SFührung entspricht, wobei in der ersten Schaltstellung der ersten Gleitschutzüberwachungseinrichtung SGleit.Fv_{B}; SGleit.Mv_{B} den Führungssollwert SFührung bildet und in der zweiten Schaltstellung der ersten Gleitschutzüberwachungseinrichtung SSoll.Fv_{B}; SSoll.Mv_{B} den Führungssollwert SFührung bildet.

Die Rückfalleinrichtung 30 stellt an ihrem Ausgang A30 ein zweites Ausgangssignal AS.2 bereit.

Das erste Ausgangssignal AS.1 liegt über eine Verbindung V20 an einem Eingang E31.1 der Umschalteinrichtung 31 an. Das zweite Ausgangssignal AS.2 liegt über eine Verbindung V21 an einem Eingang E31.2 der Umschalteinrichtung 31 an.

Die Sollwert-Kraft-Umsetzungseinrichtung 24 betätigt unter der Einwirkung eines eingangsseitig anliegenden der beiden Ausgangssignale AS.1, AS.2 die erste Bremsmittel 11 zum Reibschluss mit zweiten Bremsmitteln 14. Eine Verbindung V22 verbindet einen Ausgang A31.1 der Umschalteinrichtung 31 mit einem Eingang E24.1 der Sollwert-Kraft-Umsetzungseinrichtung 24 und eine Verbindung V23 verbindet einen Ausgang A31.2 der Umschalteinrichtung 31 mit einem Eingang E24.2 der Sollwert-Kraft-Umsetzungseinrichtung 24.

Die Istwertüberwachungseinrichtung 34 erfasst über eine Verbindung V24 an einem Eingang E34.1 den am Ausgang A33 der weiteren Gleitschutzüberwachungseinrichtung 33 bereitgestellten Überwachungssollwert SÜberwachung. Ferner erfasst die Istwertüberwachungseinrichtung 34 über eine Verbindung V25 an einem Eingang E34.2 den mittels der Sensoreinrichtung 23 als Istwert I.Cp_{B}; I.Fp_{B} erfassten Bremsistwert I. Alternativ oder zusätzlich erfasst die Istwertüberwachungseinrichtung 34 über eine Verbindung V26 an einem Eingang E34.3 den mittels der Sensoreinrichtung 23 erfassten Istwert I.Fv_{B}; I.Mv_{B} als Bremsistwert I. Bei unzulässigen Abweichungen des Bremsistwertes I von dem bereitgestellten Überwachungssollwert SÜberwachung - insbesondere wenn der erfasste Bremsistwert I für eine parametrierbare Zeit den bereitgestellten Überwachungssollwert SÜberwachung unterschreitet - gibt die Istwertüberwachungseinrichtung 34 an einem Ausgang A34 ein Umschaltsignals US aus.

Die Istwertüberwachungseinrichtung 34 vergleicht also den Überwachungssollwert SÜberwachung mit dem erfassten Bremsistwert I. Unterschreitet der erfasste Bremsistwert I den Überwachungssollwert SÜberwachung für die parametrierbare Zeit, so wird am Ausgang A34 das Umschaltsignal US ausgegeben.

Die Umschalteinrichtung 31 erfasst über eine Verbindung V27 an einem Eingang E31.3 das Umschaltsignal US der Istwertüberwachungseinrichtung 34. Beim Eingang des Umschaltsignals US schaltet die Umschalteinrichtung 31 von einer ersten Schaltstellung in eine zweite Schaltstellung um, wobei die Sollwert-Kraft-Umsetzungseinrichtung 24 in der ersten Schaltstellung der Umschalteinrichtung 31 eingangsseitig mit dem Ausgang der Sollwertregelungseinrichtung 28 und in der zweiten Schaltstellung der Umschalteinrichtung 31 eingangsseitig mit dem Ausgang der Rückfalleinrichtung 30 verbunden ist.

Die Umschalteinrichtung 31 verbindet also in ihrer ersten Schaltstellung den Ausgang A28 der Sollwertregelung mit dem Eingang E24.1 der Sollwert-Kraft-Umsetzungseinrichtung 24, so dass an dem Eingang E24.1 der Sollwert-Kraft-Umsetzungseinrichtung 24 das erste Ausgangssignal AS.1 anliegt. In einer zweiten Schaltstellung bei aktivem Umschaltsignal US verbindet die Umschalteinrichtung 31 den Ausgang A30 der Rückfalleinrichtung 30 mit dem Eingang E24.2 der Sollwert-Kraft-Umsetzungseinrichtung 24, so dass an dem Eingang E24.2 das zweite Ausgangssignal AS.2 der Rückfalleinrichtung 30 anliegt.

Die Sollwert-Kraft-Umsetzungseinrichtung 24 kann insbesondere gemäß einer früheren Anmeldung der Anmelderin ausgebildet sein, die unter dem Anmeldeaktenzeichen 102013201623.9 beim Deutschen Patentamt eingereicht worden ist. In diesem Fall gibt die Sollwertregelungseinrichtung 28 zur Regelung der Bremsgröße als erstes Ausgangssignal AS.1 zwei Teilsignale AS.1.1 uns AS.1.2 aus von denen eines AS.1.1 ein Pumpenaggregat und das andere AS.1.2 ein Bremsventil steuert. Dabei wird mittels des Pumpenaggregates Hydraulikflüssigkeit aus einem Behälter in einen Bremszylinder gepumpt und mittels des Bremsventils Hydraulikflüssigkeit aus dem Bremszylinder abgelassen. Das zweite Ausgangssignal AS.2 der Rückfalleinrichtung 30 bewirkt in diesem Fall ein Öffnen eines Schnellbremsventils, um einen Vorspanndruck eines Druckgebers auf den Bremszylinder zu geben.

Durch das erfindungsgemäße Verfahren kann die in den Vorschriften UIC541-05 oder EN15595 vorgeschriebene Gleitschutzüberwachung direkt von den erfindungsgemäßen Bremsaktoren 10 des Bremssystems 8 ausgeführt werden. Im Vergleich zu herkömmlichen Bremssystemen können dadurch erhebliche Entwicklungs- und Stückkosten eingespart werden. Zudem ist auch die Verfügbarkeit des gesamten Bremssystems 8, da keine zusätzliche elektronische Einheit notwendig ist.

Erfindungsgemäß wird also die Gleitschutzüberwachung nicht als zusätzliche Überwachungseinheit einer Gleitschutzanordnung ausgeführt, sondern als Überwachungsfunktion den Bremsaktoren zugeordnet. Jeder Bremsaktor führt für sich eine von der Gleitschutzregelungseinrichtung 19 unabhängige Überwachung des gleitschutzkorrigierten Bremssollwertes SGleit durch und stellt bei unzulässigen Abweichungen anstelle des gleitschutzkorrigierten Bremssollwertes SGleit den Bremssollwert SSoll als Führungssollwert (Ersatzbremssollwert) SFührung bereit.

Die Überwachung des gleitschutzkorrigierten Bremssollwertes SGleit eines jeden der Bremsaktoren 10 des Bremssystems 8 und die Ausgabe des Bremssollwertes SSoll als Führungssollwert (Ersatzbremssollwert) beim Ansprechen der Gleitschutzüberwachungseinrichtung 27 des jeweiligen Bremsaktors erfolgt dabei am Ende der Signalkette. Eine Verfälschung des jeweiligen gleitschutzkorrigierten Bremssollwerte SGleit - beispielsweise im Zuge der Verbindungseinrichtung 18b oder in der Eingangsschnittstelle E10.3 - kann damit ebenfalls erfasst und erkannt werden.

Bremsaktoren, die hinsichtlich ihrer Sicherheitsarchitektur so ausgebildet sind, dass sie auch im dem Fachmann bekannten Not- oder Schnellbremsfall eine geregelte Bremsgröße erzeugen, weisen schon eine Sicherheitsarchitektur auf, wie sie auch für die unabhängige Gleitschutzüberwachung gefordert ist. Bei derartigen Bremsaktoren sind also neben den genannten Komponenten, die zur Integration der Gleitschutzüberwachung in die Bremsaktoren dienen, keine weiteren elektronischen Komponenten - also kein zusätzlicher Aufwand - zur Sicherstellung der geforderten Sicherheitsarchitektur - notwendig.

## Patentansprüche

1. Bremsaktor (10) für ein Bremssystem (8) eines Fahrzeugs, insbesondere eines Schienenfahrzeugs (1), der geeignet ausgebildet ist, von einer Bremssteuerung (17b) einen gleitschutzkorrigierten Bremssollwert (SGleit) zu erfassen oder eine Gleitschutzkorrektureinrichtung (26) aufweist, die geeignet ausgebildet ist, einen von der Bremssteuerung (17b) erfassten Bremssollwert (SSoll) mittels eines Reduziersignals (RS) einer Gleitschutzregelungseinrichtung (19) auf den gleitschutzkorrigierten Bremssollwert (SGleit) zu korrigieren,
**gekennzeichnet durch**
eine Gleitschutzüberwachungseinrichtung (27), an der der gleitschutzkorrigierte Bremssollwert (SGleit) und der Bremssollwert (SSoll) anliegen und die geeignet ausgebildet ist, unter zumindest einer vorbestimmten ersten Umschaltbedingung ([a], [b], [c], [d]) von einer ersten Stellung in eine zweite Stellung umzuschalten und unter zumindest einer vorbestimmten zweiten Umschaltbedingung ([e]) von der zweiten Stellung in die erste Stellung zurückzuschalten, wobei in der ersten Stellung der gleitschutzkorrigierte Bremssollwert (SGleit) und in der zweiten Stellung der Bremssollwert (SSoll) als Führungssollwert (SFührung) an einem Ausgang (A27) der Gleitschutzüberwachungseinrichtung (27) bereitgestellt ist.

2. Bremsaktor (10) nach Anspruch 1,
**dadurch gekennzeichnet, dass**
die Gleitschutzüberwachungseinrichtung (27) geeignet ausgebildet ist, von der ersten in die zweite Stellung umzuschalten, wenn zumindest eine der folgenden vorbestimmten ersten Umschaltbedingungen ([a], [b], [c], [d]) erfüllt ist:
[a] wenn der gleitschutzkorrigierte Bremssollwert (SGleit) über eine vorgegebene erste Dauer (T1.1) unverändert und dabei kleiner ist als der Bremssollwert (SSoll),
[b] wenn der gleitschutzkorrigierte Bremssollwert (SGleit) über eine vorgegebene zweite Dauer (T2.1) unverändert ist oder abfällt und dabei kleiner ist als der Bremssollwert (SSoll),
[c] wenn der gleitschutzkorrigierte Bremssollwert (SGleit) über eine vorgegebene dritte Dauer (T3.1) größer ist als der Bremssollwert (SSoll),
[d] wenn der gleitschutzkorrigierte Bremssollwert (SGleit)ein ungültiges Datum ist.

3. Bremsaktor (10) nach Anspruch 2,
**dadurch gekennzeichnet, dass**
die Gleitschutzüberwachungseinrichtung (27) geeignet ausgebildet ist, von der zweiten in die erste Stellung zurückzuschalten, wenn folgende vorbestimmte zweite Umschaltbedingung ([e]) erfüllt ist:
[e] wenn über eine vorgegebene vierte Dauer (T4.1) keine der vorbestimmten ersten Umschaltbedingungen ([a], [b], [c], [d]) erfüllt ist.

4. Bremsaktor (10) nach einem der Ansprüche 1 bis 3,
**gekennzeichnet durch**
eine weitere Gleitschutzüberwachungseinrichtung (33), an der der gleitschutzkorrigierte Bremssollwert (SGleit) und der Bremssollwert (SSoll) anliegen und die geeignet ausgebildet ist, unter zumindest einer weiteren vorbestimmten ersten Umschaltbedingung ([f], [g], [h], [i]) von einer ersten Stellung in eine zweite Stellung umzuschalten und unter zumindest einer weiteren vorbestimmten zweiten Umschaltbedingung ([k]) von der zweiten Stellung in die erste Stellung zurückzuschalten,
wobei in der ersten Stellung der gleitschutzkorrigierte Bremssollwert (SGleit) und in der zweiten Stellung der Bremssollwert (SSoll) als Überwachungssollwert (SÜberwachung) an einem Ausgang (A33) der weitere Gleitschutzüberwachungseinrichtung (33) bereitgestellt ist.

5. Bremsaktor (10) nach Anspruch 4,
**dadurch gekennzeichnet, dass**
die weitere Gleitschutzüberwachungseinrichtung (33) geeignet ausgebildet ist, von der ersten in die zweite Stellung umzuschalten, wenn zumindest eine der folgenden weiteren vorbestimmten ersten Umschaltbedingungen ([f], [g], [h], [i]) erfüllt ist:
[f] wenn der gleitschutzkorrigierte Bremssollwert (SGleit) über eine weitere vorgegebene erste Dauer (T1.2) unverändert und dabei kleiner ist als der Bremssollwert (SSoll),
[g] wenn der gleitschutzkorrigierte Bremssollwert (SGleit) über eine weitere vorgegebene zweite Dauer (T2.2) unverändert ist oder abfällt und dabei kleiner ist als der Bremssollwert (SSoll),
[h] wenn der gleitschutzkorrigierte Bremssollwert (SGleit) über eine weitere vorgegebene dritte Dauer (T3.2) größer ist als der Bremssollwert (SSoll),
[i] wenn der gleitschutzkorrigierte Bremssollwert (SGleit) ein ungültiges Datum ist.

6. Bremsaktor (10) nach Anspruch 5,
**dadurch gekennzeichnet, dass**
die weitere Gleitschutzüberwachungseinrichtung (33) geeignet ausgebildet ist, von der zweiten in die erste Stellung zurückzuschalten, wenn folgende weitere vorbestimmte zweite Umschaltbedingung ([k]) erfüllt ist:
[k] wenn über eine weitere vorgegebene vierte Dauer (T4.2) keine der weiteren vorbestimmten ersten Umschaltbedingungen ([f], [g], [h], [i]) erfüllt ist.

7. Bremsaktor (10) nach Anspruch 6,
**dadurch gekennzeichnet, dass**
- die vorgegebene erste Dauer (T1.1) kürzer ist als die weitere vorgegebene erste Dauer (T1.2),
- die vorgegebene zweite Dauer (T2.1) kürzer ist als die weitere vorgegebene zweite Dauer (T2.2),
- die vorgegebene dritte Dauer (T3.1) länger ist als die weitere vorgegebene dritte Dauer (T3.2) und
- die vorgegebene vierte Dauer (T4.1) länger ist als die weitere vorgegebene vierte Dauer (T4.2).

8. Bremsaktor (10) nach einem der Ansprüche 1 bis 7,
**gekennzeichnet durch**
eine Sollwertregelungseinrichtung (28), die geeignet ausgebildet ist, den am Ausgang (A27) der Gleitschutzüberwachungseinrichtung (27) bereitgestellten Führungssollwert (SFührung) und einen mittels einer Sensoreinrichtung (23) erfassten Bremsistwert (I) zu erfassen und an ihrem Ausgang (A28) zumindest ein erstes Ausgangssignal (AS.1) so auszugeben, dass der erfasste Bremsistwert (I) dem bereitgestellten Führungssollwert (SFührung) entspricht.

9. Bremsaktor (10) nach einem der Ansprüche 1 bis 8,
**gekennzeichnet durch**
eine Rückfalleinrichtung (30), die geeignet ausgebildet ist, an ihrem Ausgang (A30) zumindest ein zweites Ausgangssignal (AS.2) bereitzustellen.

10. Bremsaktor (10) nach Anspruch 9,
**gekennzeichnet durch**
- eine Sollwert-Kraft-Umsetzungseinrichtung (24), die geeignet ausgebildet ist, unter der Einwirkung eines eingangsseitig anliegenden der Ausgangssignale (AS.1, AS.2) erste Bremsmittel (11) zum Reibschluss mit zweiten Bremsmitteln (14) zu betätigen,
- eine Istwertüberwachungseinrichtung (34), die geeignet ausgebildet ist, den am Ausgang (A33) der weiteren Gleitschutzüberwachungseinrichtung (33) bereitgestellten Überwachungssollwert (SÜberwachung) und den mittels der Sensoreinrichtung (23) erfassten Bremsistwert (I) zu erfassen und bei unzulässigen Abweichungen des Bremsistwertes (I) von dem bereitgestellten Überwachungssollwert (SÜberwachung) ein Umschaltsignals (US) auszugeben und
- eine Umschalteinrichtung (31), die geeignet ausgebildet ist, das Umschaltsignal (US) der Istwertüberwachungseinrichtung (34) zu erfassen und beim Eingang des Umschaltsignals (US) von einer ersten Schaltstellung in eine zweite Schaltstellung umzuschalten, wobei die Sollwert-Kraft-Umsetzungseinrichtung (24) in der ersten Schaltstellung der Umschalteinrichtung (31) eingangsseitig mit dem Ausgang (A28) der Sollwertregelungseinrichtung (28) und in der zweiten Schaltstellung der Umschalteinrichtung (31) eingangsseitig mit dem Ausgang (A30) der Rückfalleinrichtung (30) verbunden ist.

11. Bremssystem (8) zum Bremsen eines Fahrzeugs, insbesondere eines Schienenfahrzeugs (1), bei dem einander zugeordnete erste und zweite Bremsmittel (11, 14) und ein Bremsaktor (10), der eine die ersten Bremsmittel (11) zum Reibschluss mit den zweiten Bremsmitteln (14) betätigende Sollwert-Kraft-Umsetzungseinrichtung (24) umfasst, eine Bremsvorrichtung bilden, die geeignet ausgebildet ist, ein an einem Eingang der Sollwert-Kraft-Umsetzungseinrichtung (24) anliegendes Ausgangssignal (AS.1; AS.2) in einen Bremsistwert (I) umzusetzen,
**dadurch gekennzeichnet, dass** der Bremsaktor (10) nach einem der Ansprüche 1 bis 10 ausgebildet ist.

12. Bremssystem (8) nach Anspruch 11,
**dadurch gekennzeichnet, dass** der Bremsaktor (10) und die ersten Bremsmittel (11) Teil einer Bremseinheit (9) sind, die in ihrer Gesamtheit zur Montage an einem Drehgestell (3) des Schienenfahrzeugs (1) eingerichtet ist.

13. Fahrzeug, insbesondere Schienenfahrzeug (1),
**gekennzeichnet durch**
ein Bremssystem (8) nach einem der Ansprüche 11 oder 12.

14. Verfahren zum Abbremsen eines Fahrzeugs, insbesondere eines Schienenfahrzeugs (1),
bei dem ein Bremsaktor (10) von einer Bremssteuerung (17b) einen gleitschutzkorrigierten Bremssollwert (SGleit) erfasst oder eine Gleitschutzkorrektureinrichtung (26) des Bremsaktors (10) einen von der Bremssteuerung (17b) erfassten Bremssollwert (SSoll) mittels eines Reduziersignals (RS) einer Gleitschutzregelungseinrichtung (19) auf den gleitschutzkorrigierten Bremssollwert (SGleit) korrigiert,
**dadurch gekennzeichnet,**
**dass** eine Gleitschutzüberwachungseinrichtung (27) des Bremsaktors (10) den gleitschutzkorrigierten Bremssollwert (SGleit) und den Bremssollwert (SSoll) erfasst und dass die Gleitschutzüberwachungseinrichtung (27) unter zumindest einer vorbestimmten ersten Umschaltbedingung ([a], [b], [c], [d]) von einer ersten Stellung in eine zweite Stellung umschaltet und unter zumindest einer vorbestimmten zweiten Umschaltbedingung ([e]) von der zweiten Stellung in die erste Stellung zurückschaltet, wobei die Gleitschutzüberwachungseinrichtung (27) in der ersten Stellung den gleitschutzkorrigierte Bremssollwert (SGleit) und in der zweiten Schaltstellung den Bremssollwert (SSoll) als Führungssollwert (SFührung) an einem Ausgang (A27) bereitgestellt.

15. Verfahren nach Anspruch 14,
**dadurch gekennzeichnet, dass**
die Gleitschutzüberwachungseinrichtung (27) von der ersten in die zweite Stellung umschaltet, wenn zumindest eine der folgenden vorbestimmten ersten Umschaltbedingungen ([a], [b], [c], [d]) erfüllt ist:
[a] wenn der gleitschutzkorrigierte Bremssollwert (SGleit) über eine vorgegebene erste Dauer (T1.1) unverändert und dabei kleiner ist als der Bremssollwert (SSoll),
[b] wenn der gleitschutzkorrigierte Bremssollwert (SGleit) über eine vorgegebene zweite Dauer (T2.1) unverändert ist oder abfällt und dabei kleiner ist als der Bremssollwert (SSoll),
[c] wenn der gleitschutzkorrigierte Bremssollwert (SGleit) über eine vorgegebene dritte Dauer (T3.1) größer ist als der Bremssollwert (SSoll),
[d] wenn der gleitschutzkorrigierte Bremssollwert (SGleit)ein ungültiges Datum ist.

16. Verfahren nach Anspruch 15,
**dadurch gekennzeichnet, dass**
die Gleitschutzüberwachungseinrichtung (27) von der zweiten in die erste Stellung zurückschaltet, wenn folgende vorbestimmte zweite Umschaltbedingung ([e]) erfüllt ist:
[e] wenn über eine vorgegebene vierte Dauer (T4.1) keine der vorbestimmten ersten Umschaltbedingungen ([a], [b], [c], [d]) erfüllt ist.

17. Verfahren nach einem der Ansprüche 14 bis 16,
**dadurch gekennzeichnet,**
**dass** eine weitere Gleitschutzüberwachungseinrichtung (33) des Bremsaktors (10) den gleitschutzkorrigierte Bremssollwert (SGleit) und den Bremssollwert (SSoll) erfasst und dass die weitere Gleitschutzüberwachungseinrichtung (33) unter zumindest einer weiteren vorbestimmten ersten Umschaltbedingung ([f], [g], [h], [i]) von einer ersten Stellung in eine zweite Stellung umschaltet und unter zumindest einer weiteren vorbestimmten zweiten Umschaltbedingung ([k]) von der zweiten Stellung in die erste Stellung zurückschaltet, wobei die weitere Gleitschutzüberwachungseinrichtung (33) in der ersten Stellung den gleitschutzkorrigierten Bremssollwert (SGleit) und in der zweiten Stellung den Bremssollwert (SSoll) als Überwachungssollwert (SÜberwachung) an einem Ausgang (A33) bereitgestellt.

18. Verfahren nach Anspruch 17,
**dadurch gekennzeichnet, dass**
die weitere Gleitschutzüberwachungseinrichtung (33) von der ersten in die zweite Stellung umschaltet, wenn zumindest eine der folgenden weiteren vorbestimmten ersten Umschaltbedingungen ([f], [g], [h], [i]) erfüllt ist:
[f] wenn der gleitschutzkorrigierte Bremssollwert (SGleit) über eine weitere vorgegebene erste Dauer (T1.2) unverändert und dabei kleiner ist als der Bremssollwert (SSoll),
[g] wenn der gleitschutzkorrigierte Bremssollwert (SGleit) über eine weitere vorgegebene zweite Dauer (T2.2) unverändert ist oder abfällt und dabei kleiner ist als der Bremssollwert (SSoll),
[h] wenn der gleitschutzkorrigierte Bremssollwert (SGleit) über eine weitere vorgegebene dritte Dauer (T3.2) größer ist als der Bremssollwert (SSoll),
[i] wenn der gleitschutzkorrigierte Bremssollwert (SGleit) ein ungültiges Datum ist.

19. Verfahren nach Anspruch 18,
**dadurch gekennzeichnet, dass**
die weitere Gleitschutzüberwachungseinrichtung (33) von der zweiten in die erste Stellung zurückschaltet, wenn folgende weitere vorbestimmte zweite Umschaltbedingung ([k]) erfüllt ist:
[k] wenn über eine weitere vorgegebene vierte Dauer (T4.2) keine der weiteren vorbestimmten ersten Umschaltbedingungen ([f], [g], [h], [i]) erfüllt ist.

20. Verfahren nach Anspruch 19,
**dadurch gekennzeichnet, dass**
- die erste Dauer (T1.1) kürzer ist als die weitere erste Dauer (T1.2) vorgegeben wird,
- die zweite Dauer (T2.1) kürzer ist als die weitere zweite Dauer (T2.2) vorgegeben wird,
- die dritte Dauer (T3.1) länger ist als die weitere dritte Dauer (T3.2) vorgegeben wird und
- die vierte Dauer (T4.1) länger ist als die weitere vierte Dauer (T4.2) vorgegeben wird.

## Claims

1. Brake actuator (10) for a braking system (8) of a vehicle, especially a rail vehicle (1), which is suitably configured to acquire a wheel slide protection corrected braking target value (SGleit) from a brake control (17b) or has a wheel slide protection correction device (26), which is suitably configured for correcting a target brake value (SSoll) acquired by the brake control (17b) by means of a reduction signal (RS) of a wheel slide protection control device (19) to the wheel slide protection corrected braking target value (SGleit).
**characterised by**
a wheel slide protection monitoring device (27), at which the wheel slide protection corrected braking target value (SGleit) and the target brake value (SSoll) are available and which is suitably configured, under at least one predefined first switching condition ([a], [b], [c], [d]), to switch from a first position into a second position and, under at least one predefined first switching condition ([e]), to switch from the second position back to the first position, wherein in the first position the wheel slide protection corrected braking target value (SGleit) and in the second position the target brake value (SSoll) is provided as reference target value (SFührung) at an output (A27) of the wheel slide protection monitoring device (27).

2. Brake actuator (10) according to claim 1,
**characterised in that**
the wheel slide protection monitoring device (27) is suitably configured to switch from the first position to the second position when at least one of the following first switching conditions ([a], [b], [c], [d]) is fulfilled:
[a] When the wheel slide protection corrected braking target value (SGleit) is unchanged and therefore smaller than the braking target value (SSoll) over a predetermined first period (T1.1),
[b] When the wheel slide protection corrected braking target value (SGleit) is unchanged or falls over a predetermined second period (T2.1) and in this case is smaller than the braking target value (SSoll),
[c] When the wheel slide protection corrected braking target value (SGleit) is larger than the braking target value (SSoll) over a predetermined third period (T3.1),
[d] When the wheel slide protection corrected braking target value (SGleit) is invalid data.

3. Brake actuator (10) according to claim 2,
**characterised in that**
the wheel slide protection monitoring device (27) is suitably configured to switch from the second position back to the first position when at least one of the following predefined second switching condition ([e]) is fulfilled:
[e] When none of the predefined first switching conditions ([a], [b], [c], [d]) is fulfilled over a predetermined fourth period (T4.1).

4. Brake actuator (10) according to one of claims 1 to 3,
**characterised by**
a further wheel slide protection monitoring device (33), at which the wheel slide protection corrected braking target value (SGleit) and the braking target value (SSoll) are available and which is suitably configured, under at least one further predefined first switching condition ([f], [g], [h], [i]), to switch from a first position to a second position and under at least one further predefined second switching condition ([k]) to switch from the second position back to the first position,
wherein, in the first position, the wheel slide protection corrected braking target value (SGleit) and in the second position the braking target value (SSoll) is provided as monitoring target value SÜberwachung at an output (A33) of the further wheel slide protection monitoring device (33).

5. Brake actuator (10) according to claim 4,
**characterised in that**
the further wheel slide protection monitoring device (33) is suitably configured to switch from the first position to the second position when at least one of the following further first switching conditions ([f], [f], [h], [i]) is fulfilled:
[f] When the wheel slide protection corrected braking target value (SGleit) is unchanged and therefore smaller than the braking target value (SSoll) over a further predetermined first period (T1.2),
[g] When the wheel slide protection corrected braking target value (SGleit) is unchanged or falls over a further predetermined second period (T2.2) and in this case is smaller than the braking target value (SSoll),
[h] When the wheel slide protection corrected braking target value (SGleit) is larger than the braking target value (SSoll) over a further predetermined third period (T3.2),
[i] When the wheel slide protection corrected braking target value (SGleit) is invalid data.

6. Brake actuator (10) according to claim 5,
**characterised in that**
the further wheel slide protection monitoring device (33) is suitably configured to switch from the second position back to the first position when at least one of the following further predefined second switching conditions ([k]) is fulfilled:
[k] When none of the predefined first switching conditions ([f], [g], [h], [i]) is fulfilled over a further predetermined fourth period (T4.2).

7. Brake actuator (10) according to claim 6,
**characterised in that**
- the predetermined first period (T1.1) is shorter than the further predetermined first period (T1.2),
- the predetermined second period (T2.1) is shorter than the further predetermined second period (T2.2),
- the predetermined third period (T3.1) is longer than the further predetermined third period (T3.2), and
- the predetermined fourth period (T4.1) is longer than the further predetermined fourth period (T4.2).

8. Brake actuator (10) according to one of claims 1 to 7,
**characterised by**
a target value regulation device (28), which is suitably configured to acquire the reference target value (SFührung) provided at the output (A27) of the wheel slide protection monitoring device (27) and an actual braking value (I) acquired by means of a sensor device (23) and at its output (A28) to output at least one first output signal (AS.1) so that the acquired actual braking value (I) corresponds to the reference target value (SFührung) provided.

9. Brake actuator (10) according to one of claims 1 to 8,
**characterised by**
a fallback device (30), which is suitably configured to provide at least one second output signal (AS.2) at its output (A30).

10. Brake actuator (10) according to claim 9,
**characterised by**
- a target value to force conversion device (24), which is suitably configured, under the influence of one of the output signals (AS.1, AS.2) present on its input side, to actuate first braking means (11) for friction locking with second braking means (14),
- an actual value monitoring device (34), which is suitably configured to acquire the monitoring target value (SÜberwachung) provided at the output (A33) of the further wheel slide protection monitoring device (33) and the actual braking value (I) acquired by means of the sensor device (23) and, in the event of impermissible discrepancies between the actual braking value (I) and the monitoring target value (SÜberwachung) provided, to output a switching signal (US) and
- a switching device (31), which is suitably configured to acquire the switching signal (US) of the actual value monitoring device (34) and on input of the switching signal (US), to switch from the first switching position to the second switching position, wherein the target value to force conversion device (24), in the first switching position of the switching device (31), is connected on its input side to the output (A28) of the target value regulation device (28) and in the second switching position of the switching device (31) is connected on its input side to the output (A30) of the fallback device (30) .

11. Braking system (8) for braking a vehicle, especially a rail vehicle (1), in which first and second braking means (11, 14) assigned to one another and a brake actuator (10), which includes a target value to force conversion device (24) actuating the first braking means (11) for making a friction lock with the second braking means (14), form a braking apparatus, which is suitably configured for converting an output signal (AS.1, AS.2) available at an input of the target value to force conversion device (24) into an actual braking value (I),
**characterised in that**
the brake actuator (10) is embodied according to one of claims 1 to 10.

12. Braking system (8) according to claim 11,
**characterised in that**
the brake actuator (10) and the first braking means (11) are part of a brake unit (9), which is configured as a whole for installation on a bogie (3) of the rail vehicle (1).

13. Vehicle, especially a rail vehicle (1),
**characterised by**
a braking system (8) according to one of claims 11 or 12.

14. Method for braking a vehicle, especially a rail vehicle (1),
in which a brake actuator (10) acquires a wheel slide protection corrected braking target value (SGleit) from a brake control (17b) or a wheel slide protection correction device (26) of the brake actuator (10) corrects a braking target value (SSoll) acquired by the brake control (17b) by means of a reduction signal (RS) of a wheel slide protection control device (19) to the wheel slide protection corrected braking target value (SGleit),
**characterised in that**
a wheel slide protection monitoring device (27) of the brake actuator (10) acquires the wheel slide protection corrected braking target value (SGleit) and the braking target value (SSoll) and that the wheel slide protection monitoring device (27), under at least one predefined first switching condition ([a], [b], [c], [d]), switches from a first position into a second position and under at least one predefined second switching condition ([e]), switches from a second position to the first position, wherein the wheel slide protection monitoring device (27), in the first position, provides the wheel slide protection corrected braking target value (SGleit) and in the second position the braking target value (SSoll) as reference target value (SFührung) at an output (A27).

15. Method according to claim 14,
**characterised in that**
the wheel slide protection monitoring device (27) switches from the first to the second position when at least one of the following predefined first switching conditions ([a], [b], [c], [d]) is fulfilled:
[a] When the wheel slide protection corrected braking target value (SGleit) is unchanged and therefore smaller than the braking target value (SSoll) over a predetermined first period (T1.1),
[b] When the wheel slide protection corrected braking target value (SGleit) is unchanged or falls over a predetermined second period (T2.1) and in this case is smaller than the braking target value (SSoll),
[c] When the wheel slide protection corrected braking target value (SGleit) is larger than the braking target value (SSoll) over a predetermined third period (T3.1),
[d] When the wheel slide protection corrected braking target value (SGleit) is invalid data.

16. Method according to claim 15,
**characterised in that**
the wheel slide protection monitoring device (27) switches from the second position back to the first position when at least one of the following predefined second switching conditions ([e]) is fulfilled:
[e] When none of the predefined first switching conditions ([a], [b], [c], [d]) is fulfilled over a predetermined fourth period (T4.1).

17. Method according to one of claims 14 to 16,
**characterised in that**
a further wheel slide protection monitoring device (33) of the brake actuator (10) acquires the wheel slide protection corrected braking target value (SGleit) and the braking target value (SSoll) and that the further wheel slide protection monitoring device (33), under at least one further predefined first switching condition ([f], [g], [h], [i]), switches from a first position into a second position and under at least one further predefined second switching condition ([k]) switches from the second position back to the first position, wherein, in the first position, the further wheel slide protection monitoring device (33) provides the wheel slide protection corrected braking target value (SGleit) and in the second position the braking target value (SSoll) as the monitoring target value (SÜberwachung) at an output (A33) .

18. Method according to claim 17,
**characterised in that**
the further wheel slide protection monitoring device (33) switches from the first to the second position when at least one of the following first switching conditions ([f], [f], [h], [i]) is fulfilled:
[f] When the wheel slide protection corrected braking target value (SGleit) is unchanged and therefore smaller than the braking target value (SSoll) over a further predetermined first period (T1.2),
[g] When the wheel slide protection corrected braking target value (SGleit) is unchanged or falls over a further predetermined second period (T2.2) and in this case is smaller than the braking target value (SSoll),
[h] When the wheel slide protection corrected braking target value (SGleit) is larger than the braking target value (SSoll) over a further predetermined third period (T3.2),
[i] When the wheel slide protection corrected braking target value (SGleit) is invalid data.

19. Method according to claim 18,
**characterised in that**
the further wheel slide protection monitoring device (33) switches from the second position back to the first position when at least one of the following further predefined second switching conditions ([k]) is fulfilled:
[k] When none of the predefined first switching conditions ([f], [g], [h], [i]) is fulfilled over a further predetermined fourth period (T4.2).

20. Method according to claim 19,
**characterised in that**
- the first period (T1.1) is shorter than the further first period (T1.2) is predetermined,
- the second period (T2.1) is shorter than the further second period (T2.2) is predetermined,
- the third period (T3.1) is longer than the further third period (T3.2) is predetermined, and
- the fourth period (T4.1) is longer than the further fourth period (T4.2) is predetermined.

## Revendications

1. Actionneur (10) de frein pour un système (8) de freinage d'un véhicule, notamment d'un véhicule (1) ferroviaire, qui est constitué de manière appropriée pour détecter, par une commande (17b) de frein, une valeur (SGleit) de consigne de freinage corrigée en anti-enrayage ou qui a un dispositif (26) de correction de l'anti-enrayage, qui est constitué de manière appropriée pour corriger une valeur (SSoll) de consigne de freinage détectée par la commande (17b) de frein au moyen d'un signal (RS) de réduction d'un dispositif (19) de réglage de l'anti-enrayage à la valeur (SGleit) de consigne de freinage corrigée en anti-enrayage,
**caractérisé par**
un dispositif (27) de contrôle de l'anti-enrayage auquel s'applique la valeur (SGleit) de consigne de freinage corrigée en anti-enrayage et la valeur (SSoll) de consigne de freinage et qui est constitué de manière appropriée pour, dans au moins une première condition ([a], [b], [c], [d]) de commutation définie à l'avance, passer d'une première position à une deuxième position et dans au moins une deuxième condition ([e]) de commutation définie à l'avance, revenir de la deuxième position à la première position, dans lequel, dans la première position, la valeur (SGleit) de consigne de freinage corrigée en anti-enrayage et dans la deuxième position, la valeur (SSoll) de consigne de freinage est mise à disposition comme valeur (SFührung) de consigne de conduite à une sortie (A27) du dispositif (27) de contrôle de l'anti-enrayage.

2. Actionneur (10) de frein suivant la revendication 1,
**caractérisé en ce que**
le dispositif (27) de contrôle d'anti-enrayage est constitué de manière appropriée pour passer de la première à la deuxième position, si au moins l'une des premières conditions ([a], [b], [c], [d]) de commutation définies à l'avance est satisfaite :
[a] si la valeur (SGleit) de consigne de freinage corrigée en anti-enrayage reste inchangée sur une première durée (T1.1) donnée à l'avance et ainsi est plus petite que la valeur (SSoll) de consigne de freinage,
[b] si la valeur (SGleit) de consigne de freinage corrigée en anti-enrayage est inchangée sur une deuxième durée (T2.1) donnée à l'avance ou s'abaisse et ainsi est plus petite que la valeur (SSoll) de consigne de freinage,
[c] si la valeur (SGleit) de consigne de freinage corrigée en anti-dérapage est plus grande sur une troisième durée (T3.1) donnée à l'avance que la valeur (SSoll) de consigne de freinage,
[d] si la valeur (SGleit) de consigne de freinage corrigée en anti-enrayage est une donnée non valable.

3. Actionneur (10) de frein suivant la revendication 2,
**caractérisé en ce que**
le dispositif (27) de contrôle d'anti-enrayage est constitué de manière appropriée pour revenir de la deuxième à la première position, si la deuxième condition ([e]) de commutation suivante définie à l'avance est satisfaite :
[e] si, sur une quatrième durée (T4.1) donnée à l'avance, aucune des premières conditions ([a], [b], [c], [d]) de commutation définie à l'avance n'est satisfaite.

4. Actionneur (10) de frein suivant l'une des revendications 1 à 3,
**caractérisé par**
un autre dispositif (33) de contrôle d'anti-enrayage, auquel la valeur (SGleit) de consigne de freinage corrigée en anti-enrayage et la valeur (SSoll) de consigne de freinage s'appliquent, et qui est constitué de manière appropriée pour passer d'une première position à une deuxième position dans au moins une autre première condition ([f], [g], [h], [i]) de commutation définie à l'avance, et pour revenir de la deuxième position à la première position dans au moins une autre deuxième condition ([k]) de commutation définie à l'avance,
dans lequel, dans la première position, la valeur (SGleit) de consigne de freinage corrigée en anti-enrayage et dans la deuxième position, la valeur (SSoll) de consigne de freinage, est mise à disposition sous la forme d'une valeur (SÜberwachung) de consigne de contrôle à une sortie (A33) de l'autre dispositif (33) de contrôle d'anti-enrayage.

5. Actionneur (10) de frein suivant la revendication 4,
**caractérisé en ce que**
l'autre dispositif (33) de contrôle d'anti-enrayage est constitué de manière appropriée pour passer de la première à la deuxième position, si au moins l'une des autres premières conditions ([f], [g], [h], [i]) de commutation suivante définie à l'avance est satisfaite :
[f] si la valeur (SGleit) de consigne de freinage corrigée en anti-enrayage est, sur une autre première durée (T1.2) donnée à l'avance, inchangée et ainsi plus petite que la valeur (SSoll) de consigne de freinage,
[g] si la valeur (SGleit) de consigne de freinage corrigée en anti-enrayage est, sur une autre deuxième durée (T2.2) donnée à l'avance, inchangée ou s'abaisse et ainsi est plus petite que la valeur (SSoll) de consigne de freinage,
[h] si la valeur (SGleit) de consigne de freinage corrigée en anti-enrayage est, sur une autre troisième durée (T3.2) donnée à l'avance, plus grande que la valeur (SSoll) de consigne de freinage,
[i} si la valeur (SGleit) de consigne de freinage corrigée en anti-enrayage est une donnée non valable.

6. Actionneur (10) de frein suivant la revendication 5,
**caractérisé en ce que**
l'autre dispositif (33) de contrôle d'anti-enrayage est constitué de manière appropriée pour revenir de la deuxième à la première position, si une autre deuxième condition ([k]) de commutation suivante définie à l'avance est satisfaite :
[k] si, sur une autre quatrième durée (T4.2) donnée à l'avance ? aucune des autres premières conditions ([f], [g], [h], [i]) de commutation définie à l'avance n'est satisfaite.

7. Actionneur (10) de frein suivant la revendication 6,
**caractérisé en ce que**
- la première durée (T1.1) donnée à l'avance est plus courte que l'autre première durée (T1.2) donnée à l'avance,
- la deuxième durée (T2.1) donnée à l'avance est plus courte que l'autre deuxième durée (T2.2) donnée à l'avance,
- la troisième durée (T3.1) donnée à l'avance est plus longue que l'autre troisième durée (T3.2) donnée à l'avance et
- la quatrième durée (T4.1) donnée à l'avance est plus longue que l'autre quatrième durée (T4.2) donnée à l'avance.

8. Actionneur (10) de frein suivant l'une des revendications 1 à 7,
**caractérisé par**
un dispositif (28) de régulation de la valeur de consigne est constitué de manière appropriée pour détecter la valeur (SFührung) de consigne de conduite mise à disposition à la sortie (A27) du dispositif (27) de contrôle d'anti-enrayage et une valeur (I) réelle de freinage détectée au moyen d'un dispositif (23) capteur et pour émettre à sa sortie (A28) au moins un premier signal (AS.1) de sortie, de manière à ce que la valeur (I) réelle de freinage détectée corresponde à la valeur (SFührung) de consigne de conduite mise à disposition.

9. Actionneur (10) de frein suivant l'une des revendications 1 à 8,
**caractérisé par**
un dispositif (30) de réarmement, qui est constitué de manière appropriée pour mettre à disposition sur sa sortie (A30) au moins un deuxième signal (AS.2) de sortie.

10. Actionneur (10) de frein suivant la revendication 9,
**caractérisé par**
- un dispositif (24) de conversion valeurs-force, qui est constitué de manière appropriée pour, sous l'effet de l'un, s'appliquant du côté de l'entrée, des signaux (AS.1, AS.2) de sortie, actionner des premiers moyens (11) de freinage afin de les mettre en coopération avec des deuxièmes moyens (14) de freinage,
- un dispositif (34) de contrôle de valeur réelle, qui est constitué de manière appropriée pour détecter la valeur (SÜberwachung) de consigne de contrôle mise à disposition à la sortie de l'autre dispositif (33) de contrôle d'anti-enrayage et la valeur (1) réelle de freinage détectée au moyen du dispositif (23) capteur et, s'il se produit des écarts inadmissibles de la valeur (I) réelle de freinage à la valeur (SÜberwachung) de consigne de contrôle mise à disposition, émettre un signal (US) de commutation et
- un dispositif (31) de commutation, constitué de manière appropriée pour détecter le signal (US) de commutation du dispositif (34) de contrôle de valeur réelle et pour, à l'entrée du signal (US) de commutation, passer d'une première position de commutation à une deuxième position de commutation, le dispositif (24) de transformation valeurs de consigne-force étant, dans la première position de commutation du dispositif (31) de commutation, relié du côté de l'entrée à la sortie (A28) du dispositif (28) de régulation de la valeur de consigne et, dans la deuxième position de commutation du dispositif (31) de commutation, du côté de l'entrée, à la sortie (A30) du dispositif (30) de réarmement.

11. Système (8) de freinage pour freiner un véhicule, notamment un véhicule (1) ferroviaire, dans lequel des premiers et deuxièmes moyens (11, 14) de freinage associés l'un à l'autre et un actionneur (10) de frein, qui comprend un dispositif (24) de conversion valeur de consigne-force actionnant les premiers moyens (11) de frein pour une coopération à frottement avec les deuxièmes moyens (14) de frein, forment un dispositif de freinage, qui est constitué de manière appropriée pour transformer en une valeur (I) réelle de freinage un signal (AS.1 ; AS.2) de sortie s'appliquant à une entrée du dispositif (24) de conversion valeurs de consigne-force,
**caractérisé en ce que**
l'actionneur (10) de frein est constitué suivant l'une des revendications 1 à 10.

12. Système (8) de freinage suivant la revendication 11,
**caractérisé en ce que**
l'actionneur (10) de frein et les premiers moyens (11) de freinage font partie d'une unité (9) de frein, qui est conçue dans son ensemble pour être montée sur un boggie (3) du véhicule (1) ferroviaire.

13. Véhicule, notamment véhicule (1) ferroviaire,
**caractérisé par**
un système (8) de freinage suivant l'une des revendications 11 ou 12.

14. Procédé de freinage d'un véhicule, notamment d'un véhicule (1) ferroviaire,
dans lequel un actionneur (10) de frein détecte, par une commande (17b) de frein, une valeur (SGleit) de consigne de freinage corrigée en anti-enrayage ou un dispositif (26) de correction d'anti-enrayage de l'actionneur (10) de frein corrige jusqu'à la valeur (SGleit) de consigne de freinage corrigée en anti-enrayage, au moyen d'un signal (RS) de réduction d'un dispositif (19) de régulation d'anti-enrayage, une valeur (SSoll) de consigne de freinage détectée par la commande (17b) de frein,
**caractérisé**
**en ce qu'**un dispositif (27) de contrôle d'anti-enrayage de l'actionneur (10) de frein détecte la valeur (SGleit) de consigne de freinage corrigée en anti-enrayage et la valeur (SSoll) de consigne de freinage et **en ce que** le dispositif (27) de contrôle d'anti-enrayage passe dans au moins une première condition ([a], [b], [c], [d]) de commutation définie à l'avance d'une première position à une deuxième position et dans au moins une deuxième condition ([e]) de commutation définie à l'avance revient de la deuxième position à la première position, le dispositif (27) de contrôle d'anti-enrayage mettant dans la première position la valeur (SGleit) de consigne de freinage corrigée en anti-enrayage et dans la deuxième position de commutation la valeur (SSoll) de consigne de freinage comme valeur (SFührung) de consigne de conduite à disposition à une sortie (A27).

15. Procédé suivant la revendication 14,
**caractérisé en ce que**
le dispositif (27) de contrôle d'anti-enrayage passe de la première à la deuxième position si au moins l'une des premières conditions ([a], [b], [c], [d]) de commutation suivante définie à l'avance est satisfaite :
[a] si la valeur (SGleit) de consigne de freinage corrigée en anti-enrayage reste inchangée sur une première durée (T1.1) donnée à l'avance et ainsi est plus petite que la valeur (SSoll) de consigne de freinage,
[b] si la valeur (SGleit) de consigne de freinage corrigée en anti-enrayage est inchangée sur une deuxième durée (T2.1) donnée à l'avance ou s'abaisse et ainsi est plus petite que la valeur (SSoll) de consigne de freinage,
[c] si la valeur (SGleit) de consigne de freinage corrigée en anti-dérapage est plus grande sur une troisième durée (T3.1) donnée à l'avance que la valeur (SSoll) de consigne de freinage,
[d] si la valeur (SGleit) de consigne de freinage corrigée en anti-enrayage est une donnée non valable.

16. Procédé suivant la revendication 15,
**caractérisé en ce que**
le dispositif (27) de contrôle d'anti-enrayage revient de la deuxième à la première position si la deuxième condition ([e]) de commutation suivante définie à l'avance est satisfaite :
[e] si, sur une quatrième durée (T4.1) donnée à l'avance, aucune des premières conditions ([a], [b], [c], [d]) de commutation définie à l'avance n'est satisfaite.

17. Procédé suivant l'une des revendications 14 à 16,
**caractérisé**
**en ce qu'**un autre dispositif (33) de contrôle d'anti-enrayage de l'actionneur (10) de frein détecte la valeur (SGleit) de consigne de freinage corrigée en anti-enrayage et la valeur (SSoll) de consigne de freinage et **en ce que** l'autre dispositif (33) de contrôle d'anti-enrayage passe, dans au moins une autre première condition ([f], [g], [h], [i]) de commutation définie à l'avance, d'une première position à une deuxième position et, dans au moins une autre deuxième condition ([k]) de commutation définie à l'avance, revient de la deuxième position à la première position, l'autre dispositif (33) de contrôle d'anti-enrayage mettant dans la première position la valeur (SGleit) de consigne de freinage corrigée en anti-enrayage et dans la deuxième position la valeur (SSoll) de consigne de freinage à disposition, sur une sortie (A33), en tant que valeur (SÜberwachung) de consigne de contrôle.

18. Procédé suivant la revendication 17,
**caractérisé en ce que**
l'autre dispositif (33) de contrôle d'anti-enrayage passe de la première à la deuxième position si au moins l'une des autres premières conditions ([f], [g], [h], [i]) de commutation suivante définie à l'avance est satisfaite :
[f] si la valeur (SGleit) de consigne de freinage corrigée en anti-enrayage est, sur une autre première durée (T1.2) donnée à l'avance, inchangée et ainsi plus petite que la valeur (SSoll) de consigne de freinage,
[g] si la valeur (SGleit) de consigne de freinage corrigée en anti-enrayage est, sur une autre deuxième durée (T2.2) donnée à l'avance, inchangée ou s'abaisse et ainsi est plus petite que la valeur (SSoll) de consigne de freinage,
[h] si la valeur (SGleit) de consigne de freinage corrigée en anti-enrayage est, sur une autre troisième durée (T3.2) donnée à l'avance, plus grande que la valeur (SSoll) de consigne de freinage,
[i} si la valeur (SGleit) de consigne de freinage corrigée en anti-enrayage est une donnée non valable.

19. Procédé suivant la revendication 18,
**caractérisé en ce que**
l'autre dispositif (33) de contrôle d'anti-enrayage revient de la deuxième à la première position si une autre deuxième condition ([k]) de commutation suivante définie à l'avance est satisfaite :
[k] si, sur une autre quatrième durée (T4.2) donnée à l'avance aucune des autres premières conditions ([f], [g], [h], [i]) de commutation définie à l'avance n'est satisfaite.

20. Procédé suivant la revendication 19,
**caractérisé en ce que**
- on prescrit la première durée (T1.1) plus courte que l'autre première durée (T1.2),
- on prescrit la deuxième durée (T2.1) plus courte que l'autre deuxième durée (T2.2),
- on prescrit la troisième durée (T3.1) plus longue que l'autre troisième durée (T3.2) et
- on prescrit la quatrième durée (T4.1) plus longue que l'autre quatrième durée (T4.2).
